# NEUE EUROPÄISCHE PATENTSCHRIFT

(11) **EP 0 782 677 B2**
(45) Veröffentlichungstag und Bekanntmachung des Hinweises auf die Entscheidung über den Einspruch: **26.11.2003**
(45) Hinweis auf die Patenterteilung: 19.04.2000
(21) Anmeldenummer: 95934634.7
(22) Anmeldetag: 22.09.1995
(51) Int. Cl.: F16L 33/207, F16L 27/08

(54) **QUETSCHHÜLSE FÜR DRUCKSCHLÄUCHE**
PINCH SLEEVE FOR PRESSURE HOSES
DOUILLE DE SERRAGE POUR TUYAUX A FLUIDE SOUS PRESSION

(30) Priorität: 23.09.1994 DE 4434056
(43) Veröffentlichungstag der Anmeldung: 09.07.1997
(73) Patentinhaber: Lucas Industries Limited, West Midlands B90 4LA (GB)
(72) Erfinder: MELVIN, Michael, Peter, D-78713 Schramberg (DE)
(74) Vertreter: Beyer, Andreas, Dr.
(86) Internationale Anmeldenummer: EP9503767
(87) Internationale Veröffentlichungsnummer: WO96009488

(56) Entgegenhaltungen:
- EP-A- 0 258 524
- EP-A- 0 415 690
- DE-A- 4 102 047
- DE-B- 1 105 671
- DE-U- 1 825 704
- GB-A- 1 053 629
- US-A- 2 295 830
- US-A- 5 228 721

## Beschreibung

Die Erfindung betrifft eine Quetschhülse zur Verbindung eines metallgeflechtummantelten Druckschlauches. Die Erfindung betrifft ferner einen metallgeflechtummantelten Druckschlauch.

Metallgeflechtummantelte Druckschläuche kommen insbesondere in hydraulischen Anlagen oder Vorrichtungen zum Einsatz, in denen eine hydraulische Verbindung zwischen gegeneinander beweglichen Teilen hergestellt werden muß. Beispielsweise ist es bei Motorrädern üblich, einen am Lenker angebrachten Hauptbremszylinder mittels eines metallgeflechtummantelten Druckschlauches mit der meist am unteren Teil der Vorderradgabel eines Motorrades befestigten Vorderradbremse zu verbinden, um den oder die Bremskolben mittels Hydraulikdruck betätigen und dadurch die Bremsbeläge an eine mit dem Vorderrad drehfest verbundene Bremsscheibe anlegen zu können. Auch im Bereich von Baumaschinen werden metallgeflechtummantelte Druckschläuche verwendet, beispielsweise bei Baggern, um deren hydraulisch betätigte Kolben/Zylinder-Einheiten für das Heben und Senken der Baggerschaufel mit einer im Bagger zentral angeordneten, Hydraulikdruck erzeugenden Einheit zu verbinden.
Ebenso werden metallgeflechtummantelte Druckschläuche bei hydraulisch betätigten Werkzeugmaschinen eingesetzt, die häufig gegeneinander bewegliche. insbesondere drehbare Komponenten aufweisen.

Zur Verbindung eines solchen metallgeflechtummantelten Druckschlauches mit einer Anschlußarmatur wird in der Regel eine auf das zu verbindende Ende des Druckschlauches zu steckende Quetschhülse verwendet, die dann nach Aufschieben des Druckschlauches auf die Anschlußarmatur bzw. den aus letzterer hervorstehenden Anschlußstutzen in Radialrichtung zusammengequetscht wird, wodurch eine druckfeste Quetschverbindung zwischen dem Druckschlauch und der Anschlußarmatur geschaffen wird. Eine solche Quetschverbindung mit einer Quetschhülse ist beispielsweise aus der DE 41 02 047 C2 oder auch aus der EP 0 258 524 B1 bekannt.

Da wie oben erwähnt metallgeflechtummantelte Druckschläuche vorwiegend zur hydraulischen Verbindung zwischen gegeneinander beweglichen Teilen eingesetzt werden, unterliegt die Verbindungsstelle des Druckschlauches mit der Quetschhülse aufgrund der schwingenden Beanspruchung des Druckschlauches einer hohen mechanischen Belastung Es ist beobachtet worden, daß insbesondere im Bereich der Quetschhülse die Metallgeflechtummantelung des Druckschlauches zerstört wird und letzterer als Folge davon undicht wird.

Der Erfindung liegt die Aufgabe zugrunde, eine Lösung bereitzustellen, die es ermoglicht, einen anschlußfertigen metallgeflechtummantelten Druckschlauch herzustellen, der bei einer Schwingungsbeanspruchung eine erhöhte Lebensdauer hat.

Diese Aufgabe ist erfindungsgemäß durch die Merkmale von Anspruch 1. Die Aufgabe ist erfindungsgemäß auch durch einen metallgeflechtummantelten Druckschlauch gelöst, dessen Verbindung mit einer Anschlußarmatur durch eine erfindungsgemäße Quetschhülse hergestellt ist.

Der Kunststoffeinsatz der erfindungsgemäßen Quetschhülse sorgt aufgrund günstigerer Reibverhältnisse für eine deutlich herabgesetzte mechanische Beanspruchung der Metallgeflechtummantelung des Druckschlauches insbesondere im kritischen Einlaufbereich der Quetschhülse. Die Haltbarkeit der Metallgeflechtummantelung und damit des Druckschlauches insgesamt ist somit wesentlich erhöht.

Bevorzugt ist der Innendurchmesser des Kunststoffeinsatzes von seinem axial inneren Ende an geringfügig größer als der Innendurchmesser des Abschnitts des Grundkörpers der Quetschhülse, der sich axial an den Kunststoffeinsatz anschließt. Durch diese Maßnahme wird die mechanische Beanspruchung der Metallgeflechtummantelung im zuvor genannten kritischen Bereich der Quetschhülse ohne Einbußen hinsichtlich der Dichtheit der Verbindung weiter vermindert.

Bei einer Ausführungsform der erfindungsgemäßen Quetschhülse hat der Kunststoffeinsatz an seinem axial inneren Endabschnitt einen radial nach außen ragenden, umlaufenden Vorsprung, der in eine entsprechend geformte Ringnut in der Innenfläche des Grundkörpers eingreift. Diese Ausbildung derQuetschhülse sichert einen festen Sitz des Kunststoffeinsatzes im Grundkörper der Quetschhülse.

Bei einer abgewandelten Ausführungsform der erfindungsgemäßen Quetschhülse umgreift der Kunststoffeinsatz das Einlaufende des Grundkörpers. Diese abgewandelte Ausführungsform verhindert auch bei einem starken Abknicken des Druckschlauches im Bereich des Einlaufendes relativ sicher eine Beschädigung der Metallgeflechtummantelung.

Bei bevorzugten Ausführungsformen der erfindungsgemäßen Quetschhülse ist das axial äußere Ende des Kunststoffeinsatzes als Außensechskant ausgebildet. Auf diese Weise ist es wesentlich einfacher als bei herkömmlichen anschlußfertigen Druckschläuchen möglich, die Anschlußarmatur gegenüber dem Druckschlauch zu verdrehen, wenn auch an der Anschlußarmatur selbst Ansatzflächen für ein Werkzeug ausgebildet sind. Ein solches Verdrehen der Anschlußarmatur gegenüber dem Druckschlauch ist häufig notwendig, um den anschlußfertigen Druckschlauch der gegebenen Einbausituation anpassen zu können, ohne den Druckschlauch selbst in sich zu verdrehen.

Vorteilhaft ist der Kunststoffeinsatz der erfindungsgemäßen Quetschhülse aus einem Kunststoff hergestellt, der anorganische Füllstoffe oder Pigmente enthält. Ein solcher Kunststoff setzt durch seinen geringen Reibungskoeffizienten die mechanische Beanspruchung der Metallgeflechtummantelung im Einlaufbereich der Quetschhülse weiter herab. Bei einer bevorzugten Ausführungsform ist der Kunststoff Polyoxymethylen und weist einen hohen Anteil an Magnesiumsilikat auf. Als Kunststoff ist jedoch auch Polyethylen; gegebenenfalls mit entsprechenden Zusätzen, gut geeignet.

Weiter abgewandelte Ausführungsformen erfindungsgemäßer Quetschhülsen haben einen Grundkörper, der am Einlaufende einen radial nach außen stehenden, umlaufenden Vorsprung aufweist, dessen Außenumfangsfläche gerändelt ist und der vom Kunststoffeinsatz umgriffen ist. Diese Ausführungsformen sind besonders bei einem an den Grundkörper der Quetschhülse angespritzten Kunststoffeinsatz vorteilhaft und führen zu einem sehr sicheren Halt des Kunststoffeinsatzes im bzw. am Grundkörper.

Bei anderen Ausführungsformen der erfindungsgemäßen Quetschhülse ist der Kunststoffeinsatz nicht an den Grundkörper angespritzt, sondern in letzteren eingesetzt oder eingedrückt bzw. eingepreßt.

Eine Ausführungsform eines erfindungsgemäßen anschlußfertigen, metallgeflechtummantelten Druckschlauches zeichnet sich dadurch aus, daß die Quetschhülse nur längs eines axialen Abschnitts mit der Anschlußarmatur verpreßt ist, in den sich der Kunststoffeinsatz nicht erstreckt. Auf diese Weise wird vermieden, daß die reibungsvermindernde Wirkung des Kunststoffeinsatzes verschlechtert wird, indem sich die innere Oberfläche des Kunststoffeinsatzes in die Metallgeflechtummantelung des Druckschlauches drückt und dort formschlüssige Verbindungen zwischen der Metallgeflechtummantelung und dem Kunststoffeinsatz bildet. Bei einer abgewandelten Ausführungsform eines erfindungsgemäßen Druckschlauches ist auch der axiale Abschnitt der Quetschhülse mit der Anschlußarmatur verpreßt, in dem der axial innere Endabschnitt des Kunststoffeinsatzes angeordnet ist. Dies führt in einem definierten Bereich zu dem soeben beschriebenen und an sich zu vermeidenden Formschluß zwischen dem Kunststoffeinsatz und der Metallgeflechtummantelung, der für einen besonders sicheren Sitz der Metallgeflechtummantelung sorgt, in begrenztem Maße zugentlastend bezüglich der dichtenden Verbindung wirkt und damit die Lebensdauer eines solchermaßen ausgebildeten Druckschlauches weiter erhöht.

Ein Ausführungsbeispiel einer erfindungsgemäßen Quetschhülse und eines anschlußfertigen, erfindungsgemäßen Druckschlauches wird imfolgendenanhand schematischer Zeichnungen näher erläutert. Es zeigt:
- Fig. 1: den Anschlußbereich eines anschlußfertigen erfindungsgemäßen Druckschlauches mit Metallgeflechtummantelung teilweise im Längsschnitt, wobei der Zustand vor einem Verpressen der Quetschhülse dargestellt ist,
- Fig. 2: einen Teil der Ansicht aus Fig. 1 in vergrößerter Darstellung, und
- Fig. 3: die Ansicht aus Figur 1, jedoch mit radial zusammen gepreßter Quetschhülse.

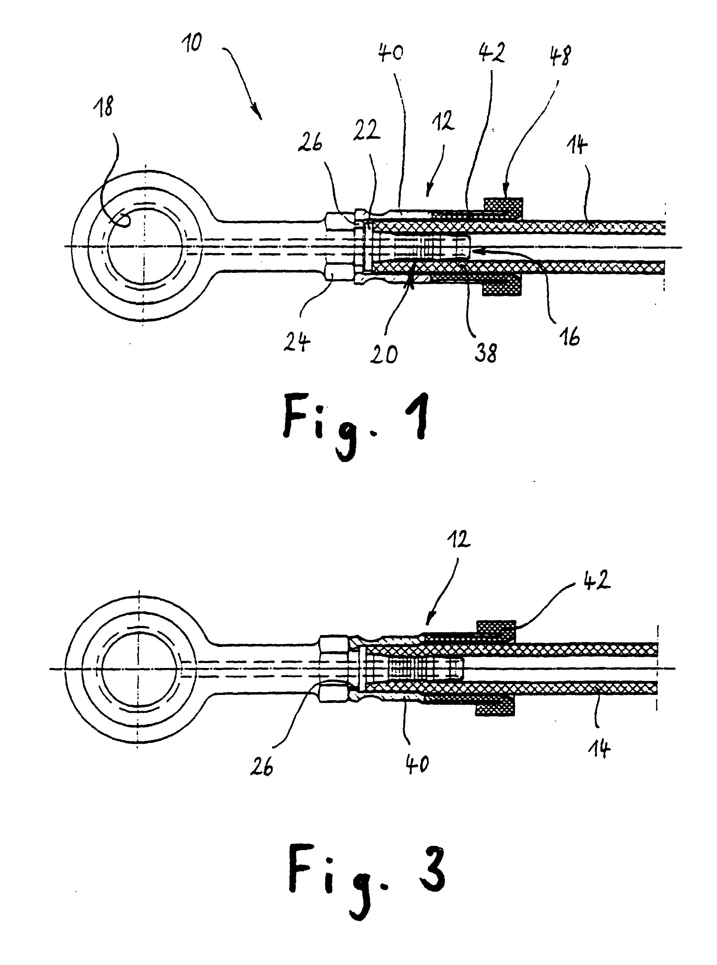

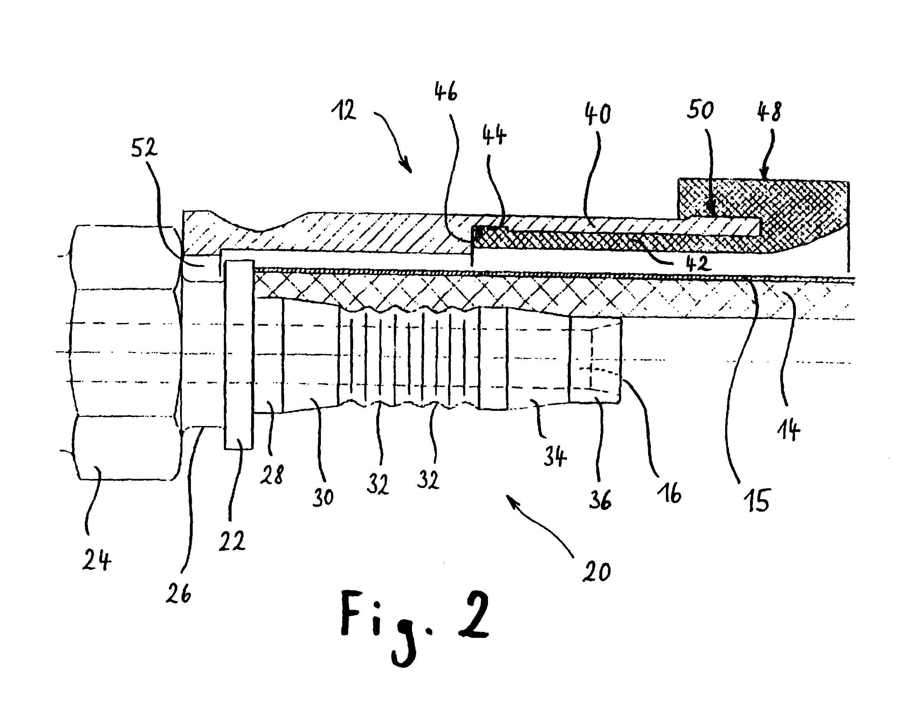

In den Figuren 1 und 2 ist eine Anschlußarmatur 10 gezeigt, an der mittels einer Quetschhülse 12 ein metallgeflechtummantelter Druckschlauch 14 befestigt werden soll. Die dargestellte Anschlußarmatur 10 ist als ein Ringnippel ausgebildet, wie er zum Anschluß eines Bremsflüssigkeitsschlauches verwendet wird, der von einem am Lenker eines Motorrades angeordneten Hauptbremszylinder zur Vorderradbremse des Motorrades führt. Der Ringnippel wird mittels einer nicht dargestellten Hohlschraube direkt an der Vorderradbremse befestigt und stellt über den Druckschlauch 14 eine Flüssigkeitsverbindung zwischen einem in der Bremse angeordneten Bremskolben und dem am Lenker montierten Hauptbremszylinder her. Hierzu weist der Ringnippel eine ihn axial durchsetzende Durchgangsbohrung 16 auf, die in einen Ringkanal 18 mündet. An seinem in Fig. 1 rechten Ende hat der Ringnippel einen von der Durchgangsbohrung 16 durchsetzten Anschlußstutzen 20, auf den der Druckschlauch 14 bis zu einem als Ringbund 22 ausgeführten Anschlag aufgeschoben ist. Mit 15 ist die hier aus Stahl bestehende Metallgeflechtummantelung bezeichnet.

Der Anschlußstutzen 20 schließt sich axial an einen am Körper des Ringnippels ausgebildeten Außensechskant 24 an, dessen Funktion später noch näher beschrieben werden wird. Vom Außensechskant 24 aus gesehen besteht der Anschlußstutzen 20 axial aufeinanderfolgend aus einer Ringnut 26, dem bereits genannten Ringbund 22, einem zylindrischen Abschnitt 28 mit gegenüber dem Ringbund 22 verringertem Durchmesser, einem sich zum freien, in Figur 1 rechten Ende hin axial verjüngenden Konus 30, einem weiteren zylindrischen Abschnitt mit gegenüber dem Abschnitt 28 verringertem Durchmesser, auf dessen Außenumfangsfläche abgesehen von einem dem freien Ende benachbarten Endabschnitt mehrere aufeinanderfolgende, umlaufende Rillen 32 ausgebildet sind, einem weiteren sich zum freien Ende hin axial verjüngenden Konus 34 und schließlich aus einem zylindrischen Abschnitt 36 mit abermals verringertem Durchmesser. Die Rillen 32 sind so ausgeführt, daß ihr den Rillengrund einschließender konkaver Teil einen Radius von 0,5 mm hat, während diedie einzelnen Rillen 32 verbindenden konvexen Teile einen Radius von 0,2 mm haben.

Die Quetschhülse 12, die im dargestellten Ausführungsbeispiel etwa die 1,5-fache Länge des Anschlußstutzens 20 hat, ist konzentrisch zum Anschlußstutzen 20 angeordnet und umgibt diesen sowie einen Endabschnitt 38 des Druckschlauches 14 vollständig. Sie besteht aus einem rohrförmigen, metallenen Grundkörper 40, der in seinem von der als Ringnippel ausgebildeten Anschlußarmatur 10 abgekehrten Bereich mit einem hohlzylindrischen Kunststoffeinsatz 42 versehen ist, welcher sich im dargestellten Ausführungsbeispiel axial gesehen von der Mitte des Grundkörpers 40 bis zum der Anschlußarmatur 10 abgekehrten Ende des Grundkörpers 40 erstreckt, das im folgenden als Einlaufende bezeichnet wird. Zur Aufnahme des Kunststoffeinsatzes 42 hat der Grundkörper 40 längs seines dafürvorgesehenen Abschnitts einen größeren Innendurchmesser als in seinem sich an den Kunststoffeinsatz 42 axial anschließenden, in Fig. 1 linken Bereich.

Der Innendurchmesser des Kunststoffeinsatzes 42 istvon seinem axial inneren Ende an geringfügig größer als der Innendurchmesser des sich axial an den Kunststoffeinsatz 42 anschließenden Abschnitts des Grundkörpers 40. An seinem axial inneren Ende hat der Kunststoffeinsatz 42 einen radial nach außen ragenden, umlaufenden Vorsprung 44, der in eine entsprechend geformte, in der Innenfläche des Grundkörpers 40 ausgebildete Ringnut 46 eingreift. An seinem gegenüberliegenden, axial äußeren Ende hat der Kunststoffeinsatz 42 einen als Außensechskant 48 ausgebildeten Flansch, der das Einlaufende des Grundkörpers 40 und einen Endabschnitt desselben umgreift. Der Innendurchmesser des Kunststoffeinsatzes 42 vergrößert sich in dem Bereich, in dem der Außensechskant 48 ausgebildet ist, nach außen kontinuierlich, so daß die sich durch den Kunststoffeinsatz 42 erstreckende Durchgangsausnehmung im axial äußeren Endabschnitt eine annähernd glockenförmige Gestalt hat.

In dem vom Kunststoffeinsatz 42 umgriffenen Endbereich des Grundkörpers 40 weist letzterer einen radial nach außen stehenden, kreiszylindrischen Vorsprung 50 auf, dessen Außenumfangsfläche gerändelt ist. Sowohl dieser Vorsprung 50 als auch die im Grundkörper 40 innen ausgebildete Ringnut 46 dienen dazu, dem im dargestellten Ausführungsbeispiel an den Grundkörper 40 angespritzten Kunststoffeinsatz 42 einen festen Halt zu geben. Alternativ kann der Kunststoffeinsatz 42 auch in den Grundkörper 40 gedrückt oder gepreßt sein, wobei dann auf den gerändelten Vorsprung 50 am Grundkörper 40 verzichtet werden kann.

Der Kunststoffeinsatz 42 besteht aus Polyoxymethylen mit einem hohen Anteil an Magnesiumsilikat, welches dem Kunststoff zur weiteren Verminderung der Reibung zwischen dem Kunststoffeinsatz 42 und der Metallgeflechtummantelung des Druckschlauches 14 zugesetzt ist. Ein anderes für den Kunststoffeinsatz 42 geeignetes Material ist Polyethylen.

Fig. 3 zeigt die Quetschhülse 12 in einem mit der Anschlußarmatur 10 verpreßten Zustand. Aus Fig. 3 ist ersichtlich, daß die Quetschhülse 12 nur in dem Bereich radial zusammengepreßt worden ist, in den sich der Kunststoffeinsatz 42 nicht erstreckt. Der Verpreßvorgang führt dazu, daß der Endabschnitt 38 des Druckschlauches 14 dichtend gegen den Anschlußstutzen 20 gepreßt wird und das der Anschlußarmatur 10 zugekehrte Ende der Quetschhülse 12 bzw. ihres Grundkörpers 40 in die zwischen dem Außensechskant 24 und dem Ringbund 22 ausgebildete Ringnut 26 gedrückt wird. Um einen möglichst sicheren Halt der verpreßten Quetschhülse 12 auf der Anschlußarmatur 10 sicherzustellen, weist das in die Ringnut 26 gedrückte Ende des Grundkörpers 40 einen radial nach innen vorspringenden, umlaufenden Bund 52 auf, der nach dem Verpreßvorgang einen Formschluß mit dem Ringbund 22 herstellt. Dadurch, daß der Axialabschnitt des Grundkörpers 40, in dem der Kunststoffeinsatz 42 angeordnet ist, nicht zusammengepreßt wird, ist einerseits sichergestellt, daß kein die Reibung zwischen der Metallgeflechtummantelung des Druckschlauches und dem Kunststoffeinsatz 42 erhöhender Formschluß zwischen den einander zugewandten Oberflächen der Metallgeflechtummantelung und des Kunststoffeinsatzes 42 auftritt, und andererseits wird dadurch ausgeschlossen, daß der am Kunststoffeinsatz 42 ausgebildete Außensechskant 48 verformt wird.

Der Außensechskant 48 dient im Zusammenspiel mit dem an der Anschlußarmatur 10 ausgebildeten Außensechskant 24 dazu, ein Verdrehen der Anschlußarmatur 10 gegenüber einem bereits mittels der Quetschhülse 12 in dichtende Anlage gepreßten Druckschlauch 14 zu vereinfachen. Ein solches Verdrehen der Anschlußarmatur 10 gegenüber dem Druckschlauch 14 ist häufig notwendig, um einen anschlußfertigen Druckschlauch an die vorgefundene Einbausituation anzupassen und damit ein sich nachteilig auf die Lebensdauer des Druckschlauches auswirkendes Verdrehen des Druckschlauches in sich zu vermeiden.

## Patentansprüche

1. Quetschhülse (12) zur Verbindung eines metallgeflechtummantelten Druckschlauches (14) mit einer Anschlußarmatur (10), welche einen Anschlußstutzen (20) zum Aufschieben des Druckschlauches (14) hat, wobei die Quetschhülse (12) einen rohrförmigen Grundkörper (40) aus Metall mit einem der Anschlußarmatur (10) zugekehrten Ende und einem gegenüberliegenden Einlaufende aufweist, und wobei die Länge der Quetschhülse (12) dazu ausreicht, den Anschlußstutzen (20) vollständig zu umgeben,
wobei
der Grundkörper (40) mit einem im wesentlichen rohrförmigen Kunststoffeinsatz (42) versehen ist, der sich von der Mitte des Grundkörpers (40) bis mindestens zum Einlaufende des Grundkörpers (40) erstreckt, wobei der Innendurchmesser des Kunststoffeinsatzes (42) in seinem bezüglich des Grundkörpers (40) axial inneren Endabschnitt im unverquetschten Zustand der Quetschhülse zumindest annähernd dem Innendurchmesser des Grundkörpers (40) entspricht, den letzterer in einem sich axial an den Kunststoffeinsatz (42) anschließenden Bereich hat, und in seinem bezüglich des Grundkörpers (40) axial äußeren Endabschnitt bis zum axial äußeren Ende hin kontinuierlich zunimmt.

2. Quetschhülse nach Anspruch 1,
**dadurch gekennzeichnet, daß** der Innendurchmesser des Kunststoffeinsatzes (42) von seinem axial inneren Ende an geringfügig größer als der Innendurchmesser des Abschnitts des Grundkörpers (40) ist, der sich axial an den Kunststoffeinsatz (42) anschließt.

3. Quetschhülse nach Anspruch 1 oder 2,
**dadurch gekennzeichnet, daß** der Kunststoffeinsatz (42) an seinem axial inneren Endabschnitt einen radial nach außen ragenden, umlaufenden Vorsprung (44) aufweist, der in eine entsprechend geformte Ringnut (46) in der Innenfläche des Grundkörpers (40) eingreift.

4. Quetschhülse nach einem der Ansprüche 1 bis 3,
**dadurch gekennzeichnet, daß** der Kunststoffeinsatz (42) das Einlaufende des Grundkörpers (40) umgreift.

5. Quetschhülse nach Anspruch 4,
**dadurch gekennzeichnet, daß** das axial äußere Ende des Kunststoffeinsatzes (42) als Außensechskant (48) ausgebildet ist.

6. Quetschhülse nach einem der vorhergehenden Ansprüche,
**dadurch gekennzeichnet, daß** der Kunststoffeinsatz (42) aus einem Kunststoff besteht, der anorganische Füllstoffe oder Pigmente enthält.

7. Quetschhülse nach Anspruch 6,
**dadurch gekennzeichnet, daß** der Kunststoff Polyoxymethylen ist und einen hohen Anteil an Magnesiumsilikat aufweist.

8. Quetschhülse nach einem der vorhergehenden Ansprüche,
**dadurch gekennzeichnet, daß** der metallene Grundkörper (40) am Einlaufende einen radial nach außen stehenden, umlaufenden Vorsprung (50) aufweist, dessen Außenumfangsfläche gerändelt ist und der vom Kunststoffeinsatz (42) umgriffen ist.

9. Quetschhülse nach einem der Ansprüche 1 bis 7,
**dadurch gekennzeichnet, daß** der Kunststoffeinsatz (42) in den Grundkörper (40) gepreßt ist.

10. Quetschhülse nach einem der Ansprüche 1 bis 8,
**dadurch gekennzeichnet, daß** der Kunststoffeinsatz (42) an den Grundkörper (40) angespritzt ist.

11. Metallgeflechtummantelter Druckschlauch,
**dadurch gekennzeichnet, daß** die Verbindung des Druckschlauches (14) mit einer Anschlußarmatur (10) durch eine Quetschhülse (12) gemäß einem der Ansprüche 1 bis 10 hergestellt ist.

12. Druckschlauch nach Anspruch 11,
**dadurch gekennzeichnet, daß** die Quetschhülse (12) nur längs eines axialen Abschnitts mit der Anschlußarmatur (10) verpreßt ist, in den sich der Kunststoffeinsatz (42) nicht erstreckt.

13. Druckschlauch nach Anspruch 12,
**dadurch gekennzeichnet, daß** auch der axiale Abschnitt der Quetschhülse (12) mit der Anschlußarmatur (10) verpreßt ist, in dem der axial innere Endabschnitt des Kunststoffeinsatzes (42) angeordnet ist.

## Claims

1. A clamping sleeve (12) for joining a pressure hose (14) having a braided metal sheathing to a fitting (10) having a connecting stud (20) adapted to receive said pressure hose (14) in a sliding-on fashion, the clamping sleeve (12) comprising a tubular metal base member (40) having an end facing towards said fitting (10) and an oppositely located inlet end, the length of the clamping sleeve (12) being sufficient to fully surround the connecting stud (20),
wherein the base member (40) is provided with an essentially tubular plastic insert (42) extending from the middle of the base member (40) to at least the inlet end of the base member (40), wherein the inner diameter of the plastic insert (42) in its with respect to the base member (40) axial inner end portion in the uncrimped condition of the clamping sleeve corresponds at least approximately to the inner diameter of the base member (40) which the latter has in a portion axially adjacent to the plastic insert (42), and in its with respect to the base member (40) axial outer end portion increases constantly up to the axial outer end.

2. The clamping sleeve according to claim 1,
**characterised in that** the inner diameter of the plastic insert (42) is slightly larger from its axially inner end onward than the inner diameter of the portion of the base member (40) that extends axially adjacent to the plastic insert (42).

3. The clamping sleeve according to claim 1 or 2,
**characterised in that** the plastic insert (42) at its axially inner end portion comprises a circumferential projection (44) which extends radially outward and engages a correspondingly shaped annular groove (46) formed in the inner surface of the base member (40).

4. The clamping sleeve according to one of claims 1 to 3,
**characterised in that** the plastic insert (42) encompasses the inlet end of the base member (40).

5. The clamping sleeve according to claim 4,
**characterised in that** the axially outer end of the plastic insert (42) is formed as an external hexagon (48).

6. The clamping sleeve according to one of the previous claims,
**characterised in that** the plastic insert (42) consists of a plastic material which contains inorganic fillers or pigments.

7. The clamping sleeve according to claim 6,
**characterised in that** the plastic material is polyoxy-methylene and has a high magnesium silicate proportion.

8. The clamping sleeve according to one of the previous claims,
**characterised in that** at the inlet end the metal base member (40) comprises a radially outwardly extending circumferential projection (50) the outer circumferential surface of which is knurled and which is encompassed by the plastic insert (42).

9. The clamping sleeve according to one of claims 1 to 7,
**characterised in that** the plastic insert (42) is pressed into the base member (40).

10. The clamping sleeve according to one of claims 1 to 8,
**characterised in that** the plastic insert (42) is injection-moulded to the base member (40).

11. A pressure hose with metal braided sheathing,
**characterised in that** the connection of the pressure hose (14) with the fitting (10) is made by means of a clamping sleeve (12) according to one of claims 1 to 10.

12. The pressure hose according to claim 11,
**characterised in that** the clamping sleeve (12) is crimped with the fitting (10) only along an axial portion into which the plastic insert (42) does not extend.

13. The pressure hose according to claim 12,
**characterised in that** also the axial portion of the clamping sleeve (12) in which the axially inner end portion of the plastic insert (42) is arranged is crimped with the fitting (10).

## Revendications

1. Douille de serrage (12) pour le raccordement d'un tuyau souple de pression (14), muni d'un revêtement métallique tressé, comprenant une pièce de raccordement (10), qui possède une tubulure de raccordement (20) servant à enfiler le tuyau souple de pression (14), la douille de serrage (12) présentant un corps de base (40) tubulaire en métal, comprenant une extrémité tournée vers la pièce de raccordement (10) et une extrémité d'entrée opposée et la longueur de la douille de serrage (12) étant suffisante pour entrer complètement la tubulure de raccordement (20), dans laquelle
le corps de base (40) est pourvu d'une garniture en matière plastique (42) principalement tubulaire, s'étendant depuis le centre du corps de base (40) jusqu'à au moins l'extrémité d'entrée du corps de base (40), le diamètre intérieur de la garniture en matière synthétique (42) dans sa portion d'extrémité axialement intérieure par rapport au corps de base (40) correspond, à l'état non raccordé par serrage de la douille de serrage, au moins approximativement au diamètre intérieur du corps de base (40), que ce dernier a dans une zone se raccordant axialement à la garniture de matière synthétique (42), et dont le diamètre intérieur augmente dans sa portion d'extrémité axialement extérieure par rapport au corps de base (40), de façon continue, jusqu'à l'extrémité axialement extérieure.

2. Douille de serrage selon la revendication 1, **caractérisée en ce que** le diamètre intérieur de la garniture de matière synthétique (42) est à partir de son extrémité axialement intérieure légèrement plus grand que le diamètre intérieur de la portion du corps de base (40) qui se raccorde à la garniture de matière synthétique (42).

3. Douille de serrage selon la revendication 1 ou 2, **caractérisée en ce que** la garniture de matière synthétique (42) présente, à sa portion d'extrémité axialement intérieure, un collet (44) périphérique faisant saillie radialement vers l'extérieur qui pénètre dans sa gorge annulaire (46) formée en conséquence dans la surface intérieure du corps de base (40).

4. Douille de serrage selon l'une quelconque des revendications 1 à 3, **caractérisée en ce que** la garniture de matière synthétique (42) entoure l'extrémité d'entrée du corps de base (40).

5. Douille de serrage selon la revendication 4, **caractérisée en ce que** l'extrémité axialement extérieure de la garniture de matière synthétique (42) a une forme de tête à six pans intérieurs (48).

6. Douille de serrage selon l'une quelconque des revendications précédentes, **caractérisée en ce que** la garniture en matière synthétique (42) est en une matière synthétique qui contient des charges ou des pigments minéraux.

7. Douille de serrage selon la revendication 6, **caractérisée en ce que** la matière synthétique est du polyoxyméthylène et présente une teneur élevée en silicate de magnésium.

8. Douille de serrage selon l'une quelconque des revendications précédentes, **caractérisée en ce que** le corps de base (40) métallique présente à l'extrémité d'entrée un collet (50) périphérique faisant saillie radialement vers l'extérieur, dont la surface périphérique est moletée et qui est enveloppé par la garniture en matière synthétique (42).

9. Douille de serrage selon l'une quelconque des revendications 1 à 7, **caractérisée en ce que** la garniture en matière synthétique (42) est pressée dans le corps de base (40).

10. Douille de serrage selon l'une quelconque des revendications 1 à 8, **caractérisée en ce que** la garniture en matière synthétique (42) est formée par moulage par injection sur le corps de base (40).

11. Tuyau souple de pression muni d'un revêtement métallique tressé, **caractérisé en ce que** la liaison du tuyau souple de pression (14) avec une pièce de raccordement (10) est constituée par une douille de serrage (12) selon l'une quelconque des revendications 1 à 10.

12. Tuyau souple de pression selon la revendication 11, **caractérisé en ce que** la douille de serrage n'est comprimée avec la pièce de raccordement (10) que le long d'une portion axiale dans laquelle la garniture de matière synthétique (42) ne s'étend pas.

13. Tuyau souple de pression selon la revendication 12, **caractérisé en ce que** la portion axiale de la douille de serrage (12) dans laquelle est disposée la portion d'extrémité axialement intérieure de la garniture de matière synthétique (42) est aussi comprimée avec la pièce de raccordement (10).
